# EUROPÄISCHE PATENTSCHRIFT

(11) **EP 2 773 001 B1**
(45) Veröffentlichungstag und Bekanntmachung des Hinweises auf die Patenterteilung: **13.04.2016**
(21) Anmeldenummer: 13157021.0
(22) Anmeldetag: 27.02.2013
(51) Int. Cl.: H02H 3/16, B61B 3/02

(54) **Einrichtung für elektrische Sicherheit und Verfahren für ein fahrerloses Schienentransportmittel**
Electrical safety device and method for a driverless track vehicle system
Dispositif de sécurité électrique et son procédé adapté à un moyen de transport sur rails sans conducteur

(43) Veröffentlichungstag der Anmeldung: 03.09.2014
(73) Patentinhaber: Siemens Aktiengesellschaft, 80333 München (DE)
(72) Erfinder: Wolf, Horst, 91056 Erlangen (DE)

(56) Entgegenhaltungen:
- EP-A1- 1 123 829
- US-A- 5 503 260

## Beschreibung

Die Erfindung betrifft eine Sicherheitseinrichtung für ein fahrerloses Transportmittel gemäß dem Oberbegriff des Patentanspruchs 1, und ein Verfahren zur Absicherung eines fahrerlosen Transportmittels bei einem Kurzschluss gemäß dem Oberbegriff des Patentanspruchs 8.

Zum Transport von Werkstücken in industriellen Automatisierungsanlagen, beispielsweise zum Transport von Rohkarossen in der Automobilfertigung, werden fahrerlose Transportmittel eingesetzt. Oft sind diese als automatisierte Elektrohängebahn (EHB) ausgeführt, die üblicher Weise aus einer Laufschiene bzw. einem Schienensystem bestehen, an der eine Anzahl von Transport- oder Fahrwagen geführt werden. Diese fahrerlosen Transportmittel verfügen üblicher Weise über einen eigenen Antrieb und eine eigene, lokale Steuerung. Diese lokalen Steuerungen der fahrerlosen Transportmittel kommunizieren regelmäßig mit einer zentralen Steuerung.

Die Druckschrift US 5 503 260 offenbart eine Sicherheitseinrichtung für ein Schienentransportsfahrzeug, die erzielt, die Abschaltung der Energieversorgung beim permanenten Verlust des Nullleiters, wobei die Sicherheitseinrichtung kurze Unterbrechung der Stromversorgung oder der Verbindung mit dem Nullleiter zulässt.

Die bereits erwähnte Laufschiene bzw. das Laufschienensystem hat zum einen die Funktion, die Fahrwagen, also die fahrerlosen Transportmittel, mechanisch zu führen. Zum anderen weist die Laufschiene bzw. das Laufschienensystem ein Schleifleitersystem auf, mit dem die Fahrwagen mit Energie versorgt werden. Dazu sind in der Regel vier Schleifbahnen für drei elektrische Phasen und einen Erdleiter vorgesehen, wobei die drei elektrischen Phasen üblicher Weise mit 400V "Drehstrom" operieren. Daneben weist das Schleifleitersystem üblicher Weise zumindest zwei weitere Schleifbahnen zur Informationsübertragung auf. Damit ist regelmäßig ein serielles BusSystem realisiert, welches mit verglichen zur Energieversorgung geringerer Signalspannung arbeitet, beispielsweise mit typischen Pegeln gebräuchlicher industrieller Bus-Systeme. Die dabei verwendeten Spannungen sind idealer Weise ungefährlich bei direkter Berührung, so dass für die Informationstechnik regelmäßig keine besonderen Maßnahmen für Berührungsschutz vorgesehen sind.

Aus konstruktiven Gründen sind die Schleifleiter für die Energieübertragung und die Schleifleiter für die Informationsübertragung räumlich nahe beieinander angeordnet; üblicher Weise wird ein einziges, kompaktes Schleifleitersystem für beide Erfordernisse verwendet. Demzufolge wird meist auch ein einziges, kompaktes Schleifersystem an den Fahrwagen sowohl für den Abgriff der Stromversorgungs-Leitungen als auch für die Informationsübertragung verwendet. Diese SchleiferSysteme weisen üblicher Weise "Bürsten" aus Graphit auf, die auf den Schleifbahnen des Schleifleitersystems gleiten.

Sicherheitsprobleme können auftreten, wenn im Schleifleitersystem bzw. am Schleifersystem der Transport- oder Fahrwagen ein mechanischer Defekt auftritt, insbesondere ein Abreißen oder Bruch der vergleichsweise spröden Schleifer ("Bürsten", "Schleifkohlen" oder dgl.). In ungünstigen Fällen kann dabei ein Kurzschluss zwischen einer der drei elektrischen Phasen der Energieversorgung und einer elektrischen Leitung der Informationsübertragung ("Rails") auftreten. Dies bedeutet, dass in einem solchen Fall die hohe Spannung einer elektrischen Phase der Energieversorgung auch an den Betriebsmitteln der Informationstechnik anliegt.

Die Informationstechnik der fahrerlosen Transportmittel ist gegenüber Erdpotential "potentialfrei" bzw. potentialgetrennt ausgeführt, was bedeutet, dass eine beschriebene Störung zwar dafür sorgt, dass die Informationstechnik nicht mehr "potentialfrei" arbeitet, sondern vielmehr auf das gegebenenfalls lebensgefährlich hohe Spannungsniveau einer elektrischen Phase der Energieversorgung gebracht wird, die Informationstechnik allerdings dennoch weiter funktionsfähig bleiben kann. Dies bedeutet, dass eine einfache Störung in Form eines Kurzschlusses zwischen einer der elektrischen Phasen und einer der "Rails" der Informationsübertragung ggf. unbemerkt bleiben kann. Sofern bei einem solchen Zustand ein Wartungszugriff auf eines der Betriebsmittel der Informationstechnik erfolgt, gleichgültig, ob es sich um ein Betriebsmittel der stationären Informationstechnik oder ein Betriebsmittel an einem der fahrerlosen Transportmittel (Fahrwagen, Transportwagen) handelt, kann ein Bediener ohne Vorwarnung mit einer lebensgefährlich hohen Spannung in Berührung geraten. Wegen der meist doppelten ("redundanten") Ausführung der Schleifer ist es darüber hinaus möglich, dass trotz eines Bruches an einem der Schleifkontakte das Gesamtsystem weiterhin funktionsfähig ist, so dass auch nicht ein Ausfall eines Transportwagens oder der gesamten fahrerlosen Transportmittel als Warnung für das möglicher Weise Vorliegen unzulässig hoher Berührungsspannungen verstanden werden kann.

Zur Lösung des Problems sind unterschiedliche Ansätze bekannt. So ist es bei "kleinen" Anordnungen mit nur einem oder wenigen fahrerlosen Transportmitteln manchmal möglich, die Energieversorgung mittels Fehlerstromschutzschalter abzusichern. Bei den modernen Systemen scheitert dies jedoch regelmäßig, weil die Fahrwagen der fahrerlosen Transportmittel üblicher Weise über Stromrichter versorgt werden, deren Rückwirkungen auf das Energieversorgungsnetz zu häufigen Fehlauslösungen der Fehlerstromschutzschalter führen, insbesondere dann, wenn die Fehlerstromschutzschalter für den Personenschutz ausgelegt sind und daher niedrige Ansprechschwellen im Bereich um 30mA aufweisen.

Eine weitere Vorgehensweise zur Erhöhung der Sicherheit kann darin bestehen, das Schienensystem und damit auch die Schleifersysteme für die Energieversorgung getrennt von dem Schienensystem und die Schleiferanordnungen der Informationsübertragung ("Rails") anzuordnen, um die Gefahr von Kurzschlüssen und Überschlägen zwischen den beiden Schienensystemen zu verringern. Dies führt jedoch zu erhöhtem konstruktiven Aufwand und ist oftmals aus Platzgründen auch nicht praktikabel. Zudem schützt eine solche konstruktive Änderung nicht davor, dass an anderer Stelle, beispielsweise in einem der fahrerlosen Transportwagen, ein Kurzschluss zwischen der Energieversorgung und der Informationsübertragung stattfindet.

Eine weitere Möglichkeit zur Verbesserung der Sicherheit besteht darin, die Betriebsmittel der Informationstechnik durchgehend gegen Berührung zu sichern, was jedoch aufgrund der Häufigkeit von notwendigen Wartungszugriffen im laufenden Betrieb, insbesondere bei fahrerlosen Transportmitteln mit einer Vielzahl von Transportwagen, oft nicht zielführend ist.

Es ist also eine Aufgabe der vorliegenden Erfindung, die elektrische Sicherheit der Informationstechnik von fahrerlosen Transportmitteln zu verbessern.

Die Lösung der erfindungsgemäßen Aufgabe macht sich zu Nutze, dass bei einem Kurzschluss zwischen einer spannungsführenden Phase der Energieversorgung und einem Betriebsmittel der Informationstechnik, beispielsweise einer der "Rails" der Informationsübertragung, sämtliche mit der betroffenen "Rail" verknüpften Betriebsmittel der Informationstechnik im Wesentlichen auf das Potential der entsprechenden elektrischen Phase "angehoben" werden. Dies bedeutet, dass nicht nur die entsprechende "Rail" oder betroffene Leitung auf das Potential der elektrischen Phase der Energieversorgung "gezogen" wird und damit im Wesentlichen gegenüber dem Erdpotential die Spannung dieser elektrischen Phase aufweist, sondern auch andere stromführende Teile der Informationstechnik, also beispielsweise die ursprünglich gegenüber Erdpotential potentialgetrennte Stromversorgung der entsprechenden Betriebsmittel der Informationstechnik, und auch andere Datenleitungen. Daher ist es erfindungsgemäß möglich, an einem der verbundenen Betriebsmittel (elektrische Leitungen etc.) der betreffenden Informationstechnik über ein Kopplungsmittel (beispielsweise Kondensatoren) einen Ableitstrom zum Erdpotential auszukoppeln, wobei dieser Ableitstrom erfasst wird (beispielsweise über einen Messwandler etc.) und im Fehlerfall zum Initiieren des Abschaltens der Energieversorgung (Not-Trennung) verwendet wird. Während bei einer Ankopplung an die Gleichsspannungs-Energieversorgung der Informationstechnik mittels eines Koppelkondensators ein jeglicher von Null verschiedener Ableitstrom (unbeachtlich zu tolerierender Einstreuungen) zum Abschalten führen kann und soll, kann bei einer Ankopplung an eine Informationsleitung, die zwangsläufig ein elektrisches Wechselsignal während des Betriebs führt, eine Abstimmung des tolerierten Ableitstroms notwendig sein, da das betriebsbedingte Wechselsignal, welches regulär an den Datenleitungen anliegt, noch nicht zum Abschalten der Energieversorgung führen darf.

Die Aufgabe wird insbesondere durch eine Sicherheitseinrichtung gemäß dem Patentanspruch 1 und durch ein Verfahren gemäß dem Patentanspruch 8 gelöst.

Dabei ist eine Sicherheitseinrichtung für ein fahrerloses Transportmittel vorgesehen, wobei das fahrerlose Transport-mittel mittels erster Schleifkontakte an ersten stationären Schleifleitern zur Energieversorgung und mittels zweiter Schleifkontakte an zweiten stationären Schleifleitern zur Informationsübertragung zwischen einem stationären und einem mobilen Teil der Informationstechnik angeschlossen ist. Dabei ist zumindest ein Betriebsmittel der Informationstechnik über ein Kopplungsmittel geerdet, wobei ein Überwachungsmittel zur Überwachung eines zwischen dem Kopplungsmittel und dem Erdpotential geführten Ableitstroms vorgesehen ist, wobei das Überwachungsmittel zur Abschaltung der Energieversorgung bei einer Überschreitung eines zulässigen Ableitstroms eingerichtet ist. Mittels einer solchen Sicherheitseinrichtung können gefährliche Fehler, insbesondere Kurzschlüsse zwischen der Energieversorgung und der Informationstechnik, sicher erkannt werden und zum zwangsweisen Abschalten der Energieversorgung führen.

Die Lösung der Aufgabe sieht weiter ein Verfahren zur Absicherung eines fahrerlosen Transportmittels gegen einen Kurzschluss zwischen einer Energieversorgung und einer Informationsübertragungseinrichtung vor, wobei zumindest ein Betriebsmittel der Informationstechnik über ein Kopplungsmittel mit dem Erdpotential gekoppelt ist, wobei ein über diese Kopplung geführter Ableitstrom überwacht wird, wobei bei einer Überschreitung eines Grenzwertes für diesen Ableitstrom die Energieversorgung abgeschaltet wird. Durch ein solches Verfahren können die zuvor bezüglich der Sicherheitseinrichtung diskutierten Vorteile realisiert werden.

Vorteilhafte Ausgestaltungen der Erfindung sind in den abhängigen Patentansprüchen angegeben; die dabei beschriebenen Merkmale und die damit realisierbaren Vorteile können sowohl einzeln, als auch in Kombination miteinander realisiert werden.

Eine besonders sichere Fehlererkennung zum einen und eine besondere Erhöhung der Sicherheit zum anderen ist gegeben, wenn die Informationstechnik und/oder die Informationsübertragung zum Betrieb mit Schutz-Kleinspannung eingerichtet ist. In einem solchen Fall ist zum einen der Unterschied des Ableitstroms zwischen dem fehlerfreien Fall und dem Fehlerfall besonders groß und damit besonders gut zur Detektierung eines unsicheren Betriebszustandes geeignet, und zum anderen müssen die Informationstechnischen Betriebsmittel beim regulären Betrieb mit Schutz-Kleinspannung regelmäßig nur wenig oder gar nicht gegen Berührungen gesichert werden.

Vorteilhaft wird als das Kopplungsmittel ein im Wesentlichen kapazitiver Koppler eingesetzt. Dies hat den Vorteil, dass trotz der erfindungsgemäßen Beschaltung zur Detektion eines gefährlichen Zustands die Betriebsmittel der Informationstechnik weiterhin potentialfrei gegenüber dem Erdpotential und gegenüber der Energieversorgung bleiben. Insbesondere bedeutet dies, dass die erfindungsgemäße Sicherheitseinrichtung und das entsprechende Verfahren keinen negativen Einfluss auf die Betriebssicherheit der Informationstechnik, auf Störabstände und dgl. haben.

Vorteilhaft umfasst das Überwachungsmittel eine Differenzstrom-Messeinrichtung, beispielsweise einen induktiven Übertrager. Solche Differenzstrom-Messeinrichtungen sind zum einen gebräuchlich und damit am Markt verfügbar, und zum anderen sehr betriebssicher, weil sie ggf. ohne aktive elektronische Bauelemente realisiert werden können.

Eine besonders einfache Realisierung ergibt sich, wenn das Kopplungsmittel an einer Gleichspannungs-Versorgung der Informationstechnik angekoppelt ist. In diesem Fall greift das Kopplungsmittel im fehlerfreien Fall auf kein Wechselsignal zu, was insbesondere bei der kapazitiven Kopplung theoretisch zu überhaupt keinem Ableitstrom und in der Praxis aufgrund von Einstreuungen etc. nur zu einem sehr geringen Ableitstrom führt.

Wie bereits erwähnt, ist es für die Betriebssicherheit ohnehin von Vorteil, wenn die Betriebsmittel der Informationstechnik im fehlerfreien Fall gegenüber der Energieversorgung potentialgetrennt sind. Darüber hinaus ergibt sich daraus der Vorteil, dass auch eine nicht-kapazitive Kopplung der Auswerteschaltung, insbesondere eines Messumformers oder eines Differenzstrom-Messgerätes, möglich ist. Insbesondere dann, wenn die Ankopplung an einer Datenübertragungsleitung, beispielsweise an einer der "Rails" oder an einer anderen Stelle des Datenbus-Systems, erfolgt, wird in diesem Fall an einem elektrischen Wechselsignal angekoppelt, was auch bei einer rein kapazitiven Ankopplung dazu führt, dass im fehlerfreien Fall ein von Null verschiedener Ableitstrom vorliegt. Dieser ist jedoch bei einer potentialfreien Ausführung der Informationstechnik wesentlich geringer, als bei einer potentialgebundenen Ausführung in Bezug auf das Erdpotential.

In einer vorteilhaften Ausgestaltung ist die Sicherheitseinrichtung an einem stationären Teil der Informationstechnik angekoppelt. Zum einen ist die Realisierung an einem stationären Teil, beispielsweise in einem Schaltschrank, konstruktiv wesentlich einfacher, als an einem mobilen Transportmittel. Zum anderen weist eine übliche Anordnung mit einem fahrerlosen Transportmittel oft nur eine einzige stationäre Einrichtung, jedoch eine Vielzahl mobiler Einrichtungen, also mobiler Transportwagen etc. auf. Dadurch, dass sowohl die mobilen Einrichtungen als auch die stationäre Einrichtung regelmäßig über die "Rails", also die Leitungen zur Informationsübertragung im elektrischen Schienensystem, durchgängig miteinander verbunden sind, findet auch eine im gesamten System durchgängige Beaufschlagung mit "gefährlicher" Versorgungsspannung im Fehlerfall statt, so dass eine einzige Überwachung des Potentials der Informationstechnik gegenüber Erdpotential ausreicht. Davon sei unberührt, dass bei weitverzweigten fahrerlosen Transportmittel-Anordnungen, insbesondere bei solchen, die segmentweise abschaltbar sind, mehrere Sicherheitseinrichtungen eingesetzt werden können oder müssen, die alle vorzugsweise an den stationären Betriebsmitteln der Informationstechnik angekoppelt werden.

Ein Ausführungsbeispiel einer erfindungsgemäßen Sicherheitseinrichtung wird nachfolgend anhand der Zeichnungen erläutert. Das Ausführungsbeispiel soll gleichzeitig auch der Erläuterung des erfindungsgemäßen Verfahrens dienen.

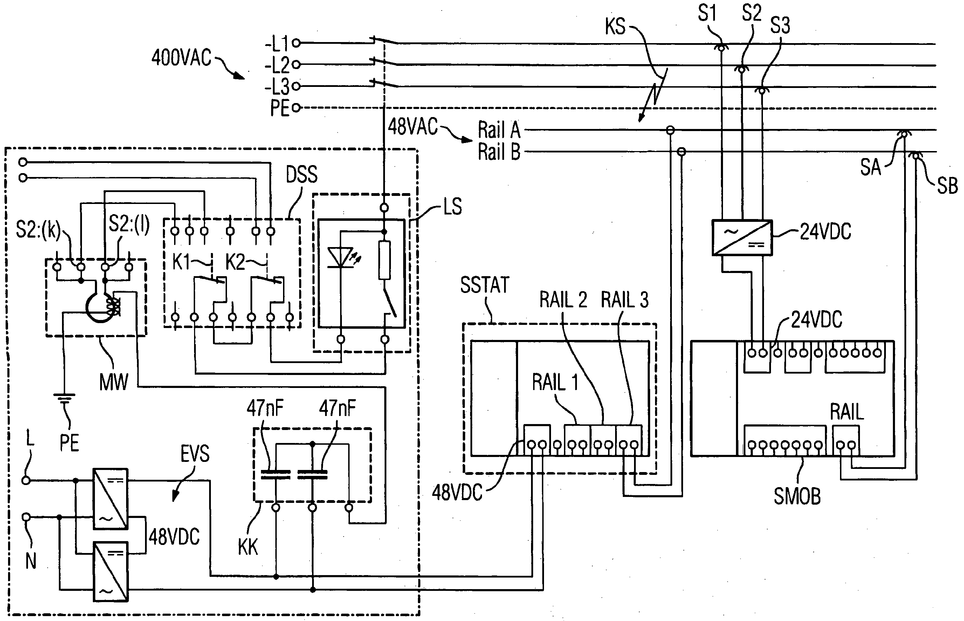

Dabei zeigt die einzige Figur in schematischer Darstellung eine Anordnung aus einem Schienensystem zur Energie- und Informationsversorgung, mobile und stationäre Teile der Informationstechnik sowie die funktionsrelevanten Bauteile der Sicherheitseinrichtung.

In der Figur ist schematisch ein Schienensystem aus sechs Leitern L1, L2, L3, PE, Rail A, Rail B dargestellt, wobei über Schleifkontakte S1, S2, S3, SA, SB ein (nicht explizit dargestelltes) fahrerloses Transportmittel bzw. dessen Fahrwagen angekoppelt ist. Der Fahrwagen ist über einen (nicht dargestellten) Schleifkontakt mittels der Erdungsschiene PE geerdet. Auf der rechten Seite der Figur ist ein mobiler Teil der Steuerungseinrichtung SMOB ("Steuerung-mobil") dargestellt, wobei die mobile Steuerung über ein dreiphasiges Netzteil mit Gleichspannung (24V) versorgt wird. Die mobile Steuerung SMOB ist über die Schleifkontakte SA, SB mit den Leitungen Rail A, Rail B der Informationsübertragung angeschlossen; die Signalspannung auf den Leitungen Rail A, Rail B beträgt 48V AC und stellt eine gegenüber Erdpotential und den Phasen L1, L2, L3 potentialfreie Wechselspannung bzw. ein Wechselsignal dar.

Die Leitungen Rail A, Rail B der Informationsübertragung werden durch einen stationären Teil der Steuerung SSTAT ("Steuerung-stationär") gespeist; selbstverständlich ist der Informationsfluss über die Informationsleitungen Rail A, Rail B bidirektional. Die stationäre Steuerung SSTAT wird über ein potentialtrennendes Netzteil EVS ("Energieversorgung stationär") mit einer Gleichspannung in Höhe von 48V versorgt. Es wird davon ausgegangen, dass aufgrund einer internen Verschaltung in den Steuerungen SSTAT, SMOB keine Potentialtrennung zwischen den Leitungen der Informationsübertragung Rail A, Rail B einerseits und den Versorgungsspannungen (24V/48V) der Steuerungen SSTAT, SMOB andererseits gegeben ist. Wegen der potentialtrennenden Eigenschaften der verwendeten Stromversorgungen der Informationstechnik weist die dargestellte Informationstechnik kein definiertes Potential gegenüber dem Erdpotential bzw. gegenüber der dreiphasigen Energieversorgung auf; wir sprechen von einem potentialfreien Betrieb der Informationstechnik.

An der 48V-Versorgungsspannung bzw. an der Spannungsführung zwischen dem Stromversorgungsgerät EVS und der stationären Steuerung SSTAT ist ein Kopplungsmittel KK ("kapazitive Kopplung") angeordnet, wobei im vorliegenden Ausführungsbeispiel beide Versorgungsleitungen kapazitiv mit dem Kopplungsmittel KK über jeweils einen kapazitiven Pfad angekoppelt sind; in alternativen Ausführungsformen kann auch nur eine der beiden Leitungen kontaktiert sein, und in anderen alternativen Ausführungsformen können neben den Kondensatoren auch andere Bauelemente in dem Kopplungsmittel KK realisiert sein; insofern handelt es sich bei der dargestellten Ausführungsform um ein vereinfachtes Beispiel.

Das Kopplungsmittel KK bzw. dessen "Ausgang" ist über eine Differenzstrom-Messeinrichtung, die hier als Überwachungsmittel eingesetzt wird, mit dem Erdpotential PE verbunden. Die hier exemplarisch eingesetzte Differenzstrom-Messeinrichtung als Überwachungsmittel besteht aus einem Messwandler MW (induktiver Messtransformator) und einem daran angeschlossenen Differenzstrom-Schalter DSS. Im vorliegenden Beispiel ist dazu das Ausgangssignal des Kopplungsmittels KK über 10 Windungen über ein magnetisches Joch geführt. Eine (nicht dargestellte) Sekundärwicklung auf dem magnetischen Joch führt zum Differenzstrom-Schalter DSS, der derart verschaltet ist, dass bei einem Stromfluss aus dem Ausgang des Messwandlers MW die Schaltkontakte K1, K2 (aus Redundanzgründen sind hier doppelte Schaltkontakte realisiert) ein Leistungsschalter LS abgeschaltet wird, was in der Folge zu einer Abschaltung der Phasen L1, L2, L3 der Energieversorgung auf dem Schleifleitersystem zur Versorgung der Fahrwagen des fahrerlosen Transportmittels führt. Für den Fall, dass aus dem Kopplungsmittel KK kein oder ein nur zu vernachlässigender Ableitstrom herausgeführt wird, ist die Differenzstrom-Messeinrichtung MW, DSS derart kalibriert, dass eine Abschaltung der Energieversorgung nicht stattfindet.

Im Folgenden soll der Fehlerfall diskutiert werden, der in der Figur derart dargestellt ist, dass ein Kurzschluss KS zwischen der elektrischen Phase L2 und der Informationsleitung Rail A gegeben ist, beispielsweise durch den Bruch einer Schleifkohle oder ein ähnliches Ereignis.

Durch den Kurzschluss KS führt der Schleifleiter Rail A nun das Potential der Phase L2, beispielsweise 230V AC, und wegen der Kopplung über die Kommunikationsschnittstellen der Steuerungen SSTAT, SMOB führt die Leitung Rail B ein Potential (Spannung) auf ähnlichem Niveau, alternierend um +/- 48V. Insgesamt weisen also sowohl die Schleifleiter Rail A, Rail B, als auch alle angeschlossenen Steuerungen SSTAT, SMOB bis hin zum sekundärseitigen Anschluss der Energieversorgung EVS eine gefährliche Berührungsspannung auf. Diese genannten Betriebsmittel liegen also auf einem Potential, welches in der Größenordnung einer Phase der Energieversorgung liegt, also 230V AC +/- 48V AC betragen kann. Über das Kopplungsmittel KK, welches für Wechselspannungen eine von Null verschiedene Impedanz darstellt, fließt also ein signifikanter Ableitstrom zu dem Anschluss des Erdpotentials PE. Entsprechend wird eine Spannung in den Ausgangsklemmen S2:(k), S2:(I) des Messwandlers MW induziert, was zum Ansprechen des Differenzstrom-Schalters DSS und durch Öffnen der Kontakte K1, K2 zum Abfallen der Erregerspule des Leistungsschalters LS führt. Entsprechend werden die drei Schaltkontakte in den Schleifleitern L1, L2, L3 geöffnet, wodurch der gefährliche Betriebszustand beendet wird.

Die gefährliche Spannung im Kurzschlussfall kann auch direkt an den Kommunikationsleitungen Rail A, Rail B oder daran angeschlossenen Bauteilen detektiert werden, wobei jedoch als Kopplungsmittel KK geeignete Kondensatoren und evtl. auch Filter vorgesehen müssen, um zu verhindern, dass im bestimmungsgemäßen Betriebsfall die Signale auf den Kommunikationsleitungen (hier: 48V AC) nicht zu einem irrtümliche Auslösen der Sicherheitseinrichtung führen. Dabei ist also zu beachten, dass ein ausreichender "Störabstand" zwischen dem Kommunikationssignal und der Netzspannung eingehalten wird.

## Patentansprüche

1. Sicherheitseinrichtung für ein fahrerloses Transportmittel,
wobei das fahrerlose Transportmittel mittels erster Schleifkontakte an ersten stationären Schleifleitern zur Energieversorgung und mittels zweiter Schleifkontakte an zweiten stationären Schleifleitern zur Informationsübertragung (Rail A, Rail B) zwischen einem stationären und einem mobilen Teil der Informationstechnik (SSTAT, SMOB) angeschlossen ist,
**dadurch gekennzeichnet,**
**dass** zumindest ein Betriebsmittel der Informationstechnik (SSTAT, SMOB) über ein Kopplungsmittel (KK) geerdet ist, wobei ein Überwachungsmittel zur Überwachung eines zwischen dem Kopplungsmittel (KK) und dem Erdpotential (PE) geführten Ableitstroms vorgesehen ist, wobei das Überwachungsmittel zur Abschaltung der Energieversorgung (L1, L2, L3) bei einer Überschreitung eines zulässigen Ableitstroms eingerichtet ist.

2. Sicherheitseinrichtung nach Patentanspruch 1,
**dadurch gekennzeichnet,**
**dass** die Informationstechnik (SSTAT, SMOB) und/oder Informationsübertragung (Rail A, Rail B) zum Betrieb mit gegenüber der Energieversorgung (L1, L2, L3) geringerer Spannungen eingerichtet ist.

3. Sicherheitseinrichtung nach einem der vorhergehenden Patentansprüche,
**dadurch gekennzeichnet,**
**dass** das Kopplungsmittel (KK) als ein im Wesentlichen kapazitiver Koppler ausgeführt ist.

4. Sicherheitseinrichtung nach einem der vorhergehenden Patentansprüche,
**dadurch gekennzeichnet,**
**dass** das Überwachungsmittel eine Differenzstrom-Messeinrichtung (MW, DSS) umfasst.

5. Sicherheitseinrichtung nach einem der vorhergehenden Patentansprüche,
**dadurch gekennzeichnet,**
**dass** das Kopplungsmittel (KK) an einer SpannungsVersorgung der Informationstechnik (SSTAT, SMOB) angekoppelt ist.

6. Sicherheitseinrichtung nach Patentanspruch 5,
**dadurch gekennzeichnet,**
**dass** die Sicherheitseinrichtung an dem stationären Teil der Informationstechnik (SSTAT) angekoppelt ist.

7. Sicherheitseinrichtung nach einem der vorhergehenden Patentansprüche,
**dadurch gekennzeichnet,**
**dass** die Betriebsmittel der Informationstechnik (SSTAT, SMOB) im fehlerfreien Fall gegenüber der Energieversorgung (L1, L2, L3) potentialgetrennt sind.

8. Verfahren zur Absicherung eines fahrerlosen Transportmittels bei einem Kurzschluss zwischen einer Energieversorgung (L1, L2, L3) und einer Informationsübertragungseinrichtung (Rail A, Rail B),
**dadurch gekennzeichnet,**
**dass** zumindest ein Betriebsmittel der Informationstechnik (SSTAT, SMOB) über ein Kopplungsmittel (KK) mit dem Erdpotential (PE) gekoppelt ist, wobei ein über diese Kopplung geführter Ableitstrom überwacht wird, wobei bei einer Überschreitung eines Grenzwertes für diesen Ableitstrom die Energieversorgung (L1, L2, L3) abgeschaltet wird.

9. Verfahren nach Patentanspruch 8,
**dadurch gekennzeichnet,**
**dass** ein im Wesentlichen kapazitives Kopplungsmittel (KK) verwendet wird.

10. Verfahren nach Patentanspruch 9,
**dadurch gekennzeichnet,**
**dass** zur Überwachung des Ableitstroms eine Differenzstrom-Messeinrichtung (MW, DSS) verwendet wird.

11. Verfahren nach Patentanspruch 8 oder 10,
**dadurch gekennzeichnet,**
**dass** als das Betriebsmittel eine Spannungs-Versorgung der Informationstechnik (SSTAT, SMOB) mit dem Erdpotential (PE) gekoppelt wird.

12. Verfahren nach einem der Patentansprüche 8 bis 11,
**dadurch gekennzeichnet,**
**dass** die kapazitive Kopplung an einem stationären Teil der Informationstechnik (SSTAT, SMOB) vorgenommen wird.

## Claims

1. Safety device for a driverless means of transport,
the driverless means of transport being connected, by means of first sliding contacts, to first stationary contact conductors for supplying energy and being connected, by means of second sliding contacts, to second stationary contact conductors for transmitting information (rail A, rail B) between a stationary part and a mobile part of the information technology (SSTAT, SMOB),
**characterized in that**
at least one operating means of the information technology (SSTAT, SMOB) is earthed via a coupling means (KK), a monitoring means for monitoring a leakage current conducted between the coupling means (KK) and the earth potential (PE) being provided, the monitoring means being set up to switch off the energy supply (L1, L2, L3) if a permissible leakage current is exceeded.

2. Safety device according to Patent Claim 1,
**characterized in that**
the information technology (SSTAT, SMOB) and/or information transmission (rail A, rail B) is/are set up for operation at voltages lower than the energy supply (L1, L2, L3).

3. Safety device according to one of the preceding patent claims,
**characterized in that**
the coupling means (KK) is in the form of a substantially capacitive coupler.

4. Safety device according to one of the preceding patent claims,
**characterized in that**
the monitoring means comprises a differential current measuring device (MW, DSS).

5. Safety device according to one of the preceding patent claims,
**characterized in that**
the coupling means (KK) is coupled to a voltage supply for the information technology (SSTAT, SMOB).

6. Safety device according to Patent Claim 5,
**characterized in that**
the safety device is coupled to the stationary part of the information technology (SSTAT).

7. Safety device according to one of the preceding patent claims,
**characterized in that**
the operating means of the information technology (SSTAT, SMOB) have potential isolation with respect to the energy supply (L1, L2, L3) in the fault-free situation.

8. Method for protecting a driverless means of transport in the event of a short circuit between an energy supply (L1, L2, L3) and an information transmission device (rail A, rail B),
**characterized in that**
at least one operating means of the information technology (SSTAT, SMOB) is coupled to the earth potential (PE) via a coupling means (KK), a leakage current conducted via this coupling being monitored, the energy supply (L1, L2, L3) being switched off if a limit value for this leakage current is exceeded.

9. Method according to Patent Claim 8,
**characterized in that**
a substantially capacitive coupling means (KK) is used.

10. Method according to Patent Claim 9,
**characterized in that**
a differential current measuring device (MW, DSS) is used to monitor the leakage current.

11. Method according to Patent Claim 8 or 10,
**characterized in that**
a voltage supply for the information technology (SSTAT, SMOB) is coupled to the earth potential (PE) as the operating means.

12. Method according to one of Patent Claims 8 to 11,
**characterized in that**
the capacitive coupling is carried out on a stationary part of the information technology (SSTAT, SMOB).

## Revendications

1. Dispositif de sécurité pour un moyen de transport sans conducteur,
dans lequel le moyen de transport sans conducteur est relié au moyen de premiers balais à des premiers conducteurs de contact fixes pour l'alimentation en énergie et au moyen de deuxièmes balais à des deuxièmes conducteurs de contact fixes pour la transmission de l'information ( Rail A, Rail B ) entre une partie mobile et une partie fixe de la technique ( SSTAT, SMOB ) d'information,
**caractérisé**
**en ce qu'**au moins un moyen de fonctionnement de la technique ( SSTAT, SMOB ) d'information est mis à la terre par un moyen ( KK ) de couplage, dans lequel il est prévu un moyen de contrôle d'un courant de fuite entre le moyen ( KK ) de couplage et le potentiel ( PE ) de terre, le moyen de contrôle étant agencé pour arrêter l'alimentation ( L1, L2, L3 ) en énergie si un courant de fuite admissible est dépassé.

2. Dispositif de sécurité suivant la revendication 1,
**caractérisé**
**en ce que** la technique de sécurité ( SSTAT, SMOB ) d'information et/ou la transmission d'information ( Rail A, Rail B ) est agencée pour fonctionner à des tensions plus basses que l'alimentation ( L1, L2, L3 ) en énergie.

3. Dispositif de sécurité suivant l'une des revendications précédentes,
**caractérisé**
**en ce que** le moyen ( KK ) de couplage est réalisé sous la forme d'un coupleur essentiellement capacitif.

4. Dispositif de sécurité suivant l'une des revendications précédentes,
**caractérisé**
**en ce que** le moyen de contrôle comprend un dispositif ( MW, DSS ) de mesure à courant différentiel.

5. Dispositif de sécurité suivant l'une des revendications précédentes
**caractérisé**
**en ce que** le moyen ( KK ) de couplage est couplé à une alimentation en tension de la technique ( SSTAT, SMOB ) d'information.

6. Dispositif de sécurité suivant la revendication 5,
**caractérisé**
**en ce que** le dispositif de sécurité est couplé à la partie fixe de la technique ( SSTAT ) d'information.

7. Dispositif de sécurité suivant l'une des revendications précédentes,
**caractérisé**
**en ce que** le moyen de fonctionnement de la technique ( SSTAT, SMOB ) d'information est, s'il n'y a pas de défaut, séparée en potentiel de l'alimentation ( L1, L2, L3 ) en énergie.

8. Procédé de sécurisation d'un moyen de transport sans conducteur en cas d'un court-circuit entre l'alimentation ( L1, L2, L3 ) en énergie et un dispositif ( Rail A, Rail B ) de transmission d'information,
**caractérisé**
**en ce qu'**au moins un moyen de fonctionnement de la technique ( SSTAT, SMOB ) d'information est couplé au potentiel ( PE ) de terre par un moyen ( KK ) de couplage, dans lequel on contrôle un courant de fuite passant par ce couplage, dans lequel on arrête l'alimentation ( L1, L2, L3 ) en énergie si une valeur limite de ce courant de fuite est dépasée.

9. Procédé suivant la revendication 8,
**caractérisé**
**en ce qu'**on utilise un moyen ( KK ) de couplage essentiellement capacitif.

10. Procédé suivant la revendication 9,
**caractérisé**
**en ce qu'**on utilise un dispositif ( MW, DSS ) de mesure à courant différentiel pour contrôler le courant de fuite.

11. Procédé suivant la revendication 8 ou 10,
**caractérisé**
**en ce qu'**on couple comme moyen de fonctionnement une alimentation en tension de la technique ( SSTAT, SMOB ) d'information au potentiel ( PE ) de terre

12. Procédé suivant l'une des revendications 8 à 11,
**caractérisé**
**en ce qu'**on effectue le couplage capacitif sur une partie fixe de la technique ( SSTAT, SMOB ) d'information.
